# EUROPÄISCHE PATENTANMELDUNG

(11) **EP 2 559 469 A1**
(43) Veröffentlichungstag der Anmeldung: **20.02.2013**
(21) Anmeldenummer: 12179258.4
(22) Anmeldetag: 03.08.2012
(51) Int. Cl.: B01D 35/153, B01D 35/16

(54) **Flüssigkeitsfilter, insbesondere ein Ölfilter**

(30) Priorität: 18.08.2011 DE 202011104686 U
(71) Anmelder: MAHLE International GmbH, 70376 Stuttgart (DE)
(72) Erfinder: Genc, Engin, 71332 Waiblingen (DE); Kiemlen, Ralf, 72760 Reutlingen (DE)
(74) Vertreter: BRP Renaud & Partner

(57) **Zusammenfassung**

Die Erfindung betrifft ein Flüssigkeitsfilter (1),
- mit einem Filtergehäuse (2), das einen Aufnahmeraum (3) für ein darin eingesetztes Ringfilterelement (4) enthält,
- mit einem durch Herausnehmen des Ringfilterelements (4) frei werdenden Leerlaufkanal (5), wobei an eine untere Endscheibe (6) des Ringfilterelements ein parallel zur Längsachse und exzentrisch abstehender Zapfen (7) angeformt ist,
- wobei am Boden des Aufnahmeraumes (3) eine Rampe (8) ausgebildet ist, die derart auf den Zapfen (7) abgestimmt ist, dass beim Einsetzen des Ringfilterelements (4) in das Filtergehäuse (2) der Zapfen (7) auf der Rampe (8) nach unten abgleitet und in die Öffnung des Leerlaufkanals (5) eindringt.

Erfindungswesentlich ist dabei, dass im Aufnahmeraum (3) eine Struktur (9) angeordnet ist, die ein funktionstüchtiges Einsetzen des Ringfilterelements (4) ausschließlich dann erlaubt, sofern das Ringfilterelement (4) mit seinem Zapfen (7) auf der Rampe (8) entlang gleitet, bis der Zapfen (7) in den Leerlaufkanal (5) eindringt.

## Beschreibung

Die Erfindung betrifft ein Flüssigkeitsfilter, insbesondere ein Ölfilter zum Reinigen von Schmieröl, insbesondere für Verbrennungsmotoren von Kraftfahrzeugen, mit den Merkmalen des Oberbegriffes des Anspruches 1. Die Erfindung betrifft außerdem ein Ringfilterelement für ein derartiges Flüssigkeitsfilter.

Aus der EP 1 229 985 B1 ist ein gattungsgemäßes Flüssigkeitsfilter mit einem im Einbauzustand im Wesentlichen stehend angeordneten Filtergehäuse bekannt, das einen Aufnahmeraum für ein darin eingesetztes Ringfilterelement zum Filtern einer Flüssigkeit enthält. Das Ringfilterelement ist dabei derart an das Filtergehäuse angepasst, dass es im Aufnahmeraum um seine Längsachse frei drehbar ist, solange ein axial und exzentrisch von der unteren Endscheibe des Ringfilterelements abstehender Zapfen nicht in eine Öffnung eines Leerlaufkanals eingreift. Am Boden des Aufnahmeraums ist eine Rampe ausgebildet, die mit einem unteren Ende an der Öffnung des Leerlaufkanals am Boden beginnt und mit zunehmender Rampenlänge in das Innere des Aufnahmeraums vorstehend ansteigt. Beim Einsetzen des Ringfilterelements in das Filtergehäuse liegt der Zapfen (Pin) auf der Rampe auf und gleitet entlang dieser bei Drehung des Ringfilterelementes nach unten ab, wobei er am unteren Ende der Rampe in die Öffnung des Leerlaufkanals eindringt. Diese Ausführungsform erfordert die Verwendung eines ganz speziellen, nämlich eines einen solchen Zapfen aufweisenden Ringfilterelements, da bei der Verwendung herkömmlicher Ringfilterelemente ohne den Zapfen eine Kurzschlussverbindung zwischen dem Leerlaufkanal und dem Einlass bzw. dem Auslass vorhanden wäre und damit die Funktionsfähigkeit nicht mehr gegeben ist.

Die vorliegende Erfindung beschäftigt sich mit dem Problem, für einen Flüssigkeitsfilter der gattungsgemäßen Art eine verbesserte bzw. eine alternative Ausführungsform anzugeben, die insbesondere eine gesteigerte Robustheit und eine verbesserte Montagesicherheit für ein Ringfilterelement aufweist.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einem Flüssigkeitsfilter, insbesondere bei einem Ölfilter zum Reinigen von Schmieröl, insbesondere für Verbrennungsmotoren von Kraftfahrzeugen, Strukturen vorzusehen, die einen Falscheinbau eines Ringfilterelements verhindern und somit die für einen störungsfreien und langlebigen Betrieb erforderliche hohe Filterleistung gewährleisten und die das Filtergehäuse zusätzlich aussteifen. Gelöst wird dieses Problem einerseits durch ein spezielles Schlüssel-Schloss-Prinzip, wobei das Ringfilterelement den Schlüssel und ein Filtergehäuse bzw. ein in diesem angeordneter Funktionsträger das zugehörige Schloss bilden und andererseits durch zusätzliche Strukturen, die im Aufnahmeraum eines Filtergehäuses angeordnet sind und dem erfindungsgemäßen Flüssigkeitsfilter die gesteigerte Robustheit verleihen und gleichzeitig den Falscheinbau des Ringfilterelements oder den Einbau eines ungeeigneten Filterelements verhindern. Das Filtergehäuse ist im Einbauzustand im Wesentlichen stehend angeordnet und enthält einen Aufnahmeraum für das darin eingesetzte Ringfilterelement zum Filtern der Flüssigkeit. Ebenso besitzt das Flüssigkeitsfilter einen Einlass für Rohflüssigkeit sowie einen Auslass für gereinigte Flüssigkeit sowie einen Leerlaufkanal, der durch ein Herausnehmen des Ringfilterelements geöffnet wird. An einer unteren Endscheibe des Ringfilterelementes ist hierfür ein parallel zur Längsachse und exzentrisch abstehender Zapfen angeformt, der bei in das Filtergehäuse eingesetztem Ringfilterelement dichtend in eine Öffnung des Leerlaufkanals eindringt. Zusätzlich ist am Boden des Aufnahmeraums eine Rampe vorgesehen, die mit einem unteren Ende an der Öffnung des Leerlaufkanals am Boden beginnt und mit zunehmender Rampenlänge in das Innere des Ausnahmeraums vorstehend ansteigt, wobei die Rampe und der Zapfen so aufeinander abgestimmt sind, dass beim Einsetzen des Ringfilterelements in das Filtergehäuse der Zapfen - solange er noch nicht in die Öffnung des Leerlaufkanals eingedrungen ist - auf der Rampe aufliegt und bei Drehung des Ringfilterelementes nach unten entlang der Rampe abgleitet und am unteren Ende der Rampe in die Öffnung des Leerlaufkanals eindringt und diesen dadurch verschließt. Erfindungsgemäß ist nun im Aufnahmeraum, insbesondere benachbart zu der Rampe am Boden des Aufnahmeraums, zumindest eine Struktur angeordnet, die derart ausgebildet ist, dass sie einerseits das Filtergehäuse aussteift und zudem ein funktionstüchtiges Einsetzen des Ringfilterelementes ausschließlich dann erlaubt, sofern das Filterelement mit seinem Zapfen auf die Rampe aufgesetzt wird und entlang dieser abgleitet bis der Zapfen am unteren Ende der Rampe in die Öffnung des Leerlaufkanals eindringt. Eine derartige Struktur erhöht die Robustheit mit marginalem Mehraufwand, wodurch der Verbraucher ein deutlich verbessertes Flüssigkeitsfilter erhält. Gleichzeitig erhöht es den Kundennutzen dadurch, dass ein Falscheinbau des Ringfilterelements nahezu unmöglich ist und zugleich der Einbau von nicht geeigneten Ringfilterelementen verhindert wird.

Bei einer vorteilhaften Weiterbildung der erfindungsgemäßen Lösung ist die Struktur als Rippe ausgebildet. Eine derartige Rippe kann sich beispielsweise im Wesentlichen parallel zur Rampe erstrecken oder aber es ist denkbar, dass mehrere Rippen vorgesehen sind, die sich in Radialrichtung des Filtergehäuses erstrecken und die beispielsweise zusammen mit dem Filtergehäuse oder dem Funktionsträger in einem gemeinsamen Spritzvorgang gespritzt werden. Derartige Rippen können einerseits kostengünstig und andererseits in nahezu beliebiger Ausgestaltung hergestellt werden, so dass durch die Erfindung vergleichsweise preisgünstig der hohe Zusatznutzen für den Kunden, nämlich die Qualitätssteigerung, sichergestellt werden kann. Derartige Rippen verhindern wiederum den Falscheinbau des Ringfilterelements, da sie das funktionstüchtige Einsetzen des Ringfilterelements ausschließlich dann erlauben, sofern es - wie vorgesehen - mit seinem Zapfen auf die Rampe aufgesetzt wird und entlang dieser gleitet, bis der Zapfen in die Öffnung des Leerlaufkanals eindringt. Bei einem unbeabsichtigten Abgleiten des Zapfens von der Rampe wird das Ringfilterelement durch die in Radialrichtung ausgerichteten Rippen an einem weiteren Verdrehen und damit an einem vordefinierten Einführen des Zapfens in den Leerlaufkanal gehindert.

Bei einer vorteilhaften Weiterbildung der erfindungsgemäßen Lösung sind die Struktur und die Rampe am Filtergehäuse oder an einem Funktionsträger, der im Filtergehäuse eingesetzt wird, angeordnet. Dies soll zeigen, dass die erfindungsgemäße Rampe und die erfindungsgemäße Struktur nicht unbedingt zwangsläufig direkt am Filtergehäuse angeordnet werden müssen, sondern beispielsweise auch an einem Einsatzteil, nämlich dem Funktionsträger, welches dann im Filtergehäuse eingebaut wird.

Bei einer vorteilhaften Weiterbildung der erfindungsgemäßen Lösung weist die Struktur Rippen auf, die sich insbesondere in Radialrichtung des Filtergehäuses und damit orthogonal zur Rampe erstrecken. Dabei verringert sich ein Umfangsabstand der sich in Radialrichtung erstreckenden Rippen in Abwärtsrichtung der Rampe. Durch derartig radial ausgerichtete Rippen ist es möglich, die Rampe an sich auszusteifen, nämlich einerseits gegenüber einem Standrohr in der Mitte und andererseits gegenüber einer Innenwandung des Filtergehäuses, wodurch das Filtergehäuse insbesondere in diesem Bodenbereich eine deutlich erhöhte Steifigkeit aufweist. Zudem kann mit derartigen Rippen ein unbeabsichtigtes Abrutschen des Zapfens des Ringfilterelementes von der Rampe vermieden werden, da bei einem derartigen Abrutschen ein Weiterdrehen des Ringfilterelementes aufgrund der quer zur Drehrichtung verlaufenden Rippen unterbunden wird. Die Rippen selbst können dabei am Filtergehäuse oder an einem Funktionsträger angespritzt und in dieser Ausgestaltung kostengünstig zusammen mit diesem in einem einzigen Arbeitsschritt hergestellt werden.

Weitere wichtige Merkmale und Vorteile der erfindungsgemäßen Vorrichtung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Dabei zeigen, jeweils schematisch,
- Fig. 1: einen Längsschnitt durch ein Flüssigkeitsfilter in einem Bodenbereich mit einer erfindungsgemäßen Struktur,
- Fig. 2: einen Querschnitt durch den Flüssigkeitsfilter gemäß der Fig. 1 im Bereich der Struktur,
- Fig. 3: eine Darstellung wie in Fig. 1, jedoch mit einer anders ausgebildeten Struktur,
- Fig. 4: eine Darstellung wie in Fig. 2, jedoch bei der gemäß der Fig. 3 gezeigten Struktur,
- Fig. 5: eine weitere Ausführungsform der erfindungsgemäßen Struktur,
- Fig. 6: eine Darstellung wie in Fig. 5, jedoch bei eingesetztem Ringfilterelement,
- Fig. 7: eine Schrägansicht auf Fig. 6.

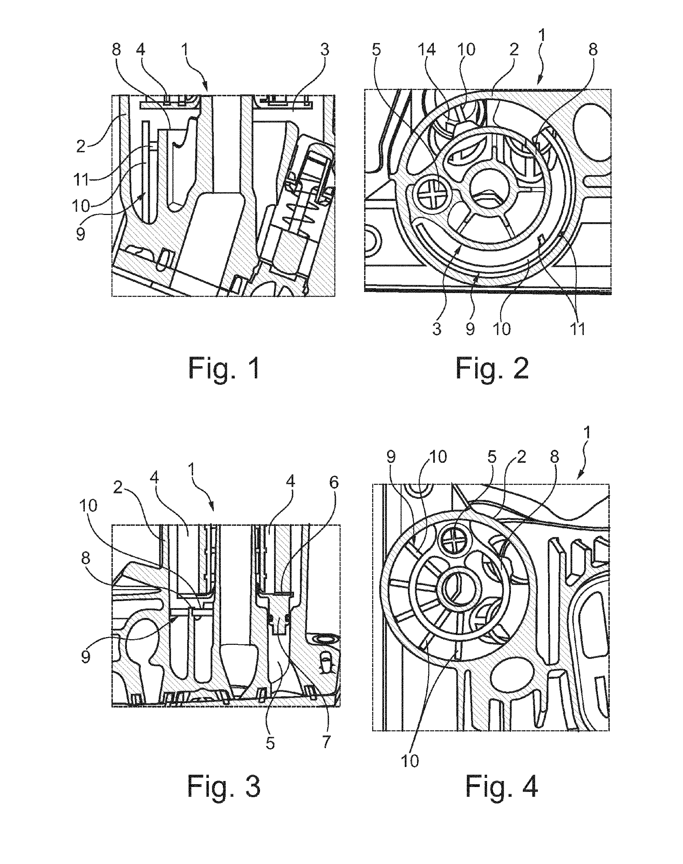

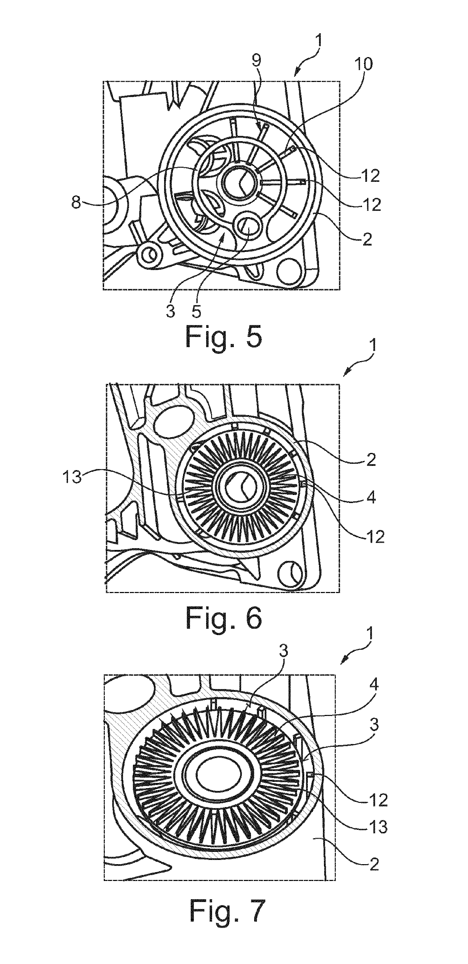

Entsprechend den Fig. 1-6, weist ein erfindungsgemäßes Flüssigkeitsfilter 1, welches insbesondere als Ölfilter zum Reinigen von Schmieröl, insbesondere für Verbrennungsmotoren in Kraftfahrzeugen ausgebildet ist, ein Filtergehäuse 2 mit einem Aufnahmeraum 3 auf, in welchem ein Ringfilterelement 4 (vgl. Fig. 6 und 7) zum Filtern einer Flüssigkeit eingesetzt ist. Selbstverständlich besitzt das Flüssigkeitsfilter 1 in bekannter Weise zusätzlich einen Einlass für die Rohflüssigkeit und einen Auslass für die gereinigte Flüssigkeit, ebenso wie einen durch Herausnehmen des Ringfilterelements 4 frei werdenden Leerlaufkanal 5 (vgl. Fig. 2 und 3), wobei an eine untere Endscheibe 6 des Ringfilterelementes 4 ein parallel zur Längsachse und exzentrisch abstehender Zapfen 7 angeformt ist (vgl. Fig. 3), der bei in das Filtergehäuse 2 eingesetztem Ringfilterelement 4 dichtend in eine Öffnung des Leerlaufkanals 5 eindringt. Am Boden Aufnahmeraums 3 ist zusätzlich eine Rampe 8 ausgebildet, die mit einem unteren Ende an der Öffnung des Leerlaufkanals 5 beginnt und mit zunehmender Rampenlänge in das Innere des Aufnahmeraums 3 vorstehend ansteigt. Die Rampe 8 und der Zapfen 7 sind dabei so aufeinander abgestimmt, dass beim Einsetzen des Ringfilterelementes 4 in das Filtergehäuse 2 der Zapfen 7 - solange er noch nicht in die Öffnung des Leerlaufkanals 5 eingedrungen ist - auf der Rampe 8 aufliegt und bei Drehung des Ringfilterelementes 4 um seine Längsachse nach unten abgleitet und am unteren Ende der Rampe 8 in die Öffnung des Leerlaufkanals 5 eindringt. Erfindungswesentlich ist nun, dass im Aufnahmeraum 3, insbesondere benachbart zu der Rampe 8 am Boden des Aufnahmeraums 3, zumindest eine Struktur 9 angeordnet ist, die ein funktionstüchtiges Einsetzen des Ringfilterelementes 4 ausschließlich dann erlaubt, sofern dieses mit seinem Zapfen 7 auf die Rampe 8 aufgesetzt wird und entlang dieser gleitet, bis der Zapfen 7 am unteren Ende der Rampe 8 in die Öffnung des Leerlaufkanals 5 eindringt. Die zumindest eine Struktur 9 dient dabei insbesondere zur Qualitätssteigerung und kann unterschiedlichste Formen aufweisen, wie dies beispielsweise gemäß den Fig. 2 und 4 dargestellt ist. Die Struktur 9 und die Rampe 8 können dabei entweder am Filtergehäuse 2 selbst oder an einem in dieses einsetzbaren Funktionsträger (nicht gezeigt) angeordnet sein. Die Struktur 9 kann dabei die Rampe 8 nach oben überragen, wie dies beispielsweise gemäß der Fig. 1 dargestellt ist, oder niedriger als diese ausgebildet sein, wie dies beispielsweise gemäß der Fig. 3 dargestellt ist. Selbstverständlich ist auch eine gleichhohe Ausbildung der Struktur 9 und der Rampe 8 denkbar. Ist die Struktur 9 höher ausgebildet als die Rampe 8, so kann diese zusätzlich eine seitliche Führung für den auf der Rampe 8 entlanggleitenden Zapfen 7 des Ringfilterelementes 4 bilden.

Generell kann die Struktur 9 Rippen 10 aufweisen, die sich im Wesentlichen parallel zur Rampe 8 erstrecken, wie dies beispielsweise gemäß den Fig. 1 und 2 gezeigt ist, oder aber Rippen 10, die in Radialrichtung des Filtergehäuses 2 und damit orthogonal zur Rampe 8 verlaufen, wie dies beispielsweise gemäß den Fig. 3-5 dargestellt ist. Derartig angeordnete Rippen 10 bzw. Strukturen 9 steifen insbesondere die Rampe 8 gegenüber dem Filtergehäuse 2 aus und machen das Filtergehäuse 2 im Bodenbereich insgesamt deutlich steifer. Zusätzlich kann mit den gemäß den Fig. 3 und 4 gezeigten Rippen 10 auch eine Falschmontage des Ringfilterelementes 4 unterbunden werden, da das Ringfilterelement 4 bei einem unbeabsichtigten Abrutschen seines Zapfens 7 von der Rampe 8 an einer weiteren Verdrehung durch die Rippen 10 gehindert wird. Mittels der Strukturen 9 können somit ein qualitativ hochwertiger Zusammenbau und eine positionsgenaue Montage des Ringfilterelementes 4 im Filtergehäuse 2 erreicht werden. Gemäß der Fig. 4 weisen dabei die einzelnen Rippen 10 der Struktur 9 in Umfangsrichtung einen nahezu gleichgroßen Abstand auf, wobei sich der Umfangsabstand auch in Abwärtsrichtung der Rampe 8 verringern kann. Hierdurch ist insbesondere eine Aussteifung der Rampe 8 im Bereich des Leerlaufkanals 5 verbessert. Die beiderseits der Rampe 8 angeordneten und sich in Radialrichtung des Filtergehäuses 2 erstreckenden Rippen 10 können dabei die Rampe 8 auch nach oben überragen, wobei sie dann eine Ausnehmung aufweisen müssen, die so groß ist, dass der Zapfen 7 durch sie hindurch passt und die beiden Rippen 10 somit eine Gasse für den Zapfen 7 bilden.

Betrachtet man nochmals die Struktur 9 gemäß den Fig. 1 und 2, so kann man erkennen, dass die dort abgebildete Struktur 9 eine bogenförmige Rippe 10 besitzt, die sich um mehr als 180° parallel zur Rampe 8 erstreckt. Die gemäß den Fig. 1 und 2 gezeigte Rippenform ist dabei die einfachste, wobei selbstverständlich auch Rippen 10 mit zusätzlichen seitlichen Ästen 11 denkbar sind. Ebenso denkbar ist, dass einzelne Öffnungen 14 (vgl. Fig. 2) im Filtergehäuse 2 bzw. in einem zugehörigen Funktionsträger mittels einer Rippe 10 gequert und dadurch ausgesteift werden. Selbstverständlich ist bei allen gezeigten Ausführungsformen der Strukturen 9 bzw. der Rippen 10 darauf zu achten, dass die für die Funktionsweise des Flüssigkeitsfilters 1 erforderliche Durchlässigkeit für Flüssigkeit zuverlässig gewährleistet werden kann.

Betrachtet man die Darstellungen des Flüssigkeitsfilters 1 gemäß den Fig. 5-7, so kann man erkennen, dass an einer Innenwandung des Filtergehäuses 2 angeordnete und sich in Axialrichtung erstreckende Positionierrippen 12 vorgesehen sind, die bei einem eingesetzten Ringfilterelement 4 vorzugsweise an diesem oder an einer unteren Endscheibe 6 oder einer oberen Endscheibe 13 anliegen. Die Positionierrippen 12 können dabei zusammenhängend mit den am Boden verlaufenden Rippen 10 der Struktur 9 ausgebildet sein. Durch das Vorsehen der Positionierrippen 12 ist eine vorzugsweise spielfreie Anordnung des Ringfilterelementes 4 im Filtergehäuse 2 möglich, wodurch dieses exakt im Filtergehäuse 2 gehalten wird. Die Positionierrippen 12 können einen integralen Bestandteil der Struktur 9 bilden und insbesondere einstückig mit dieser ausgebildet sein. Die Struktur 9 kann selbstverständlich auch ausschließlich derartige Positionierrippen 12 ohne zusätzliche Rippen 10 aufweisen. Auch die Positionierrippen 12 steifen dabei das Filtergehäuse 2 aus.

Das Filtergehäuse 2 ist üblicherweise ebenso wie das Ringfilterelement 4 im Wesentlichen stehend angeordnet, wobei unter einer stehenden Anordnung Abweichungen von einer Lotrechten von bis zu 40° verstanden werden können.

Mit der zumindest einen am Boden des Aufnahmeraums 3 angeordneten Struktur 9 kann somit nicht nur die Steifigkeit im Bodenbereich des Filtergehäuses 2 gesteigert, sondern zugleich auch die Gefahr eines Falscheinbaus bzw. die Gefahr eines Verklemmens des Ringfilterelementes 4 bei der Montage reduziert werden. Auch kann der unbeabsichtigte Einbau von ungeeigneten Filterelementen vermieden und dadurch der Kunde vor Schäden, die durch den Einbau ungeeigneter Filterelemente entstehen können, bewahrt werden. Die gezeigten Ausführungsformen der Strukturen 9 bzw. der zugehörigen Rippen 10 sollen dabei selbstverständlich lediglich rein exemplarisch verstanden werden, so dass auch weitere Strukturen 9, die in Form und/oder Größe von den gezeigten Strukturen 9 abweichen, jedoch denselben Zweck erfüllen, von der Erfindung mitumfasst sein sollen.

## Patentansprüche

1. Flüssigkeitsfilter (1), insbesondere ein Ölfilter zum Reinigen von Schmieröl, insbesondere für Verbrennungsmotoren von Kraftfahrzeugen,
- mit einem Filtergehäuse (2), das einen Aufnahmeraum (3) für ein darin eingesetztes Ringfilterelement (4) zum Filtern einer Flüssigkeit enthält,
- mit einem Einlass für Rohflüssigkeit und einem Auslass für gereinigte Flüssigkeit,
- mit einem durch Herausnehmen des Ringfilterelements (4) frei werdenden Leerlaufkanal (5), wobei an eine untere Endscheibe (6) des Ringfilterelements ein parallel zur Längsachse und exzentrisch abstehender Zapfen (7) angeformt ist, der bei in das Filtergehäuse (2) eingesetztem Ringfilterelement (4) dichtend in eine Öffnung des Leerlaufkanals (5) eindringt,
- wobei am Boden des Aufnahmeraumes (3) eine Rampe (8) ausgebildet ist, die mit einem unteren Ende an der Öffnung des Leerlaufkanals (5) am Boden beginnt und mit zunehmender Rampenlänge in das Innere des Aufnahmeraumes (3) vorstehend ansteigt,
- wobei die Rampe (8) und der Zapfen (7) so aufeinander abgestimmt sind, dass beim Einsetzen des Ringfilterelements (4) in das Filtergehäuse (2) der Zapfen (7) - solange er noch nicht in die Öffnung des Leerlaufkanals (5) eingedrungen ist - auf der Rampe (8) aufliegt und bei Drehung des Ringfilterelements (4) um seine Längsachse nach unten abgleitet und am unteren Ende der Rampe (8) in die Öffnung des Leerlaufkanals (5) eindringt,
**dadurch gekennzeichnet,**
**dass** benachbart im Aufnahmeraum (3) zumindest eine Struktur (9) angeordnet ist, die ein funktionstüchtiges Einsetzen des Ringfilterelements (4) ausschließlich dann erlaubt, sofern das Ringfilterelement (4) mit seinem Zapfen (7) auf die Rampe (8) aufgesetzt wird und entlang dieser gleitet, bis der Zapfen (7) am unteren Ende der Rampe (8) in die Öffnung des Leerlaufkanals (5) eindringt und die das Filtergehäuse (2) aussteift.

2. Flüssigkeitsfilter nach Anspruch 1,
**dadurch gekennzeichnet,**
**dass** die Struktur (9) und/oder die Rampe (8) am Filtergehäuse (2) oder an einem Funktionsträger, der im Filtergehäuse (2) eingesetzt ist, angeordnet sind.

3. Flüssigkeitsfilter nach Anspruch 1 oder 2,
**dadurch gekennzeichnet,**
**dass** die Struktur (9) die Rampe (8) überragt oder niedriger als diese ausgebildet ist.

4. Flüssigkeitsfilter nach einem der Ansprüche 1 bis 3,
**dadurch gekennzeichnet,**
**dass** die Struktur (9) zumindest eine Rippe (10) aufweist.

5. Flüssigkeitsfilter nach Anspruch 4,
**dadurch gekennzeichnet,**
**dass** sich die Rippe (10) in Radialrichtung des Filtergehäuses (2) und damit orthogonal zur Rampe (8) oder im Wesentlichen parallel zu dieser erstreckt.

6. Flüssigkeitsfilter nach Anspruch 5,
**dadurch gekennzeichnet,**
**dass** mehrere Rippen (10) vorgesehen sind, wobei sich ein Umfangsabstand der sich in Radialrichtung erstreckenden Rippen (10) in Abwärtsrichtung der Rampe (8) verringert.

7. Flüssigkeitsfilter nach einem der Ansprüche 1 bis 6,
**dadurch gekennzeichnet,**
**dass** an einer Innenwandung des Filtergehäuses (2) angeordnete und sich in Axialrichtung erstreckende Positionierrippen (12) vorgesehen sind, die bei eingesetztem Ringfilterelement (4) an diesem anliegen.

8. Flüssigkeitsfilter nach Anspruch 7,
**dadurch gekennzeichnet,**
**dass** die Positionierrippen (12) einen integralen Bestandteil der Struktur (9) bilden und insbesondere einstückig mit dieser ausgebildet sind.

9. Ringfilterelement (4) für ein Flüssigkeitsfilter (1) nach einem der vorhergehenden Ansprüche.
